Europäisches Patentamt

European Patent Office

Office européen des brevets

(19)

(11) Publication number: **0 293 390 B1**

(12) # EUROPEAN PATENT SPECIFICATION

(45) Date of publication of patent specification: **30.09.92**   (51) Int. Cl.5: **B29B 15/08**

(21) Application number: **87901861.2**

(22) Date of filing: **06.02.87**

(86) International application number:
**PCT/US87/00287**

(87) International publication number:
**WO 87/04972 (27.08.87 87/19)**

(54) **DRY BLENDING WITH FIBERS.**

(30) Priority: **19.02.86 US 831240**

(43) Date of publication of application:
**07.12.88 Bulletin 88/49**

(45) Publication of the grant of the patent:
**30.09.92 Bulletin 92/40**

(84) Designated Contracting States:
**AT BE CH DE FR GB IT LI LU NL SE**

(56) References cited:
**US-A- 1 960 030**
**US-A- 3 150 215**
**US-A- 4 501 047**

(73) Proprietor: **ASHLAND OIL, INC.**
**P.O. Box 391, BL-5**
**Ashland, KY 41114(US)**

(72) Inventor: **LEE, Donald, M.**
**92 South Altamont Road**
**Huntington, WV 25701(US)**

(74) Representative: **Lambert, Hugh Richmond**
**D. YOUNG & CO. 10 Staple Inn**
**London, WC1V 7RD(GB)**

EP 0 293 390 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to the compounding of fibrous components with a particulate solid material, such as a binder. More specifically, this invention relates to the compounding of carbon fibres with a particulate binder to form a uniform blend of fibre and binder, for example, for use in the manufacture of moulded brake pads.

Brake pads are conventionally made by resin reinforced materials and then machined into appropriate shapes. Examples of appropriate resins that are used in brake pads are phenolic resins. Necessary attributes of brake pads are their ability to withstand mechanical compression, to maintain their shape, to withstand high temperatures, and to distribute friction uniformly.

Currently, the fibrous reinforcement used in the manufacture of brake pads is asbestos, but in view of the hazardous nature of asbestos fibre and the associated environmental concerns, substitutes for asbestos are now in demand. The primary characteristics that make asbestos a useful fibrous reinforcement material in brake pads are its high temperature, performance, high strength and light weight.

It is these same characteristics that make carbon fibre a particularly attractive partial substitute. Unfortunately, the carbon fibres which produce the best results tend to be those which are most uniform in terms of diameter and length. This is unfortunate because it is precisely the uniformity of length and diameter which tends to result in a phenomena, which for purposes for this specification, will be referred to as the "balling tendency".

In a mix of dry fibrous carbon fibres, there is a tendency for the carbon fibres to clump together in spheroidal particles. These particles are made up of clumped and intertwined discrete carbon fibres. Once carbon fibres have formed tightly agglomerated closely interacting bundles of carbon fibres, they do not uniformly distribute throughout a dry binder matrix during stirring. More particularly, when these materials are on a machined surface of a brake pad, they form high friction stratchy zones that play havoc with a brake disc. On the other hand, the optimum wear properties and optimum performance properties occur when very uniform fibres in terms of both length and diameter are fully and uniformly dispersed throughout the brake pad in such a manner so as to avoid surface discontinuities such as described above.

In EP-A-0 125 511, the usefulness of carbon fibres as reinforcement materials is disclosed. Also disclosed is the fact that carbon fibres are apt to form lumps. To ensure uniform dispersion of carbon fibres having lengths ranging from 5 to 100 mm, prior to addition to a gypsum slurry, bundles of carbon fibres are, in accordance with that disclosure, separated into single fibres by dispersing them in water with supersonic agitation. Once the carbon fibres have been uniformly dispersed in a gypsum slurry, they tend to remain separated provided the ratio of amount of the carbon fibres to gypsum is very small.

In US-A-4,501,047, a fibre processor is disclosed employing a high speed agitator to dissect or exfoliate clumps or bundles of a fibre and to disperse it as individual fibres into a carrier gas for subsequent mixing with a binder. Employing a high speed agitator in this way is very energy intensive and, as production rates rise, its effectiveness tends to fall off dramatically. In addition, use of high sheer on fibres tends to cause a great deal of attrition and wear on the fibres limiting the size of the fibres that may usefully be employed. In that apparatus, the fibres are separated as a result of direct contact with blades rotating at a rate of from 1,524 to 2,743 m/min. (5,000 to 9,000 ft/min.), and which blades have one or more pick-like points. The carrier gas is drawn through the agitator at a speed sufficient to entrain the separated fibres but without entraining the larger, unseparated clumps. Carrier gas velocities are not specifically described, but it is stated that the blower situated at the downstream end of the agitator has to operate at a pressure differential of at least 40 inches (101.6 cms) of water, preferably at least about 50 inches (127 cms), and at a blower speed of around 10,000 r.p.m. At lower speeds, i.e. around 5,000 r.p.m., there is said to be a rapid loss of fluffing capacity and chunks of unfluffed material appear at the blower outlet. All in all, therefore, US-A-4,501,047 teaches some quite severe conditions for the exfoliation of fibre clumps.

In accordance with the present invention, a method has been developed which can be used to exfoliate bulk fibrous material and to mix the exfoliated material, without further risk of clumping, with a particulate binder under very much milder conditions which are therefore energy saving and far less injurious to the individual fibres.

The invention is primarily concerned with the blending of uniform length carbon fibres having preferred diameters in the range 5 to about 30 microns and lengths preferably in the range 350 to about 600 microns, and which are therefore essentially suitable for brake pads where the optimum fibre length is in the range 400 microns to ½ inch (12.7 mm) and the optimum diameter in the range 5 to 20 microns. However, the invention does have broader applications in terms of distributing any fibre which has a tendency to undergo balling when introduced, as a dry material, directly into a blender containing dry or wet matrix material. For example, any fibre having a diameter in the range of about 5 to 30 microns and lengths from 50 microns to $\frac{1}{2}$ inch (12.7 mm) can be easily handled in the method and apparatus of this invention.

Essentially, this invention is based on the observation that if fibres are first fluidized in a carrier gas stream, e.g. air, so that they are essentially a random mix of loosely, as opposed to closely, interacting discrete fibres, such a fluidized distribution can be uniformly added to a blender containing a wet or dry matrix material while such blender is in operation so as to result in a uniform distribution of the fibres throughout the matrix material, this method substantially, if not totally, eliminating the phenomena of clumping into spheres, i.e. the "balling phenomenon". Alternatively, the dry matrix material can be added directly to, or otherwise incorprated, in the fluidized stream of fibres.

More specifically, we have found that that random mix of loosely interacting discrete fibres can be obtained by entraining the fibres in a carrier gas stream and passing the gas stream containing the entrained fibres through a turbulent mixing zone providing a pressure differential measured in inches of water, in the range 10 to 35 inches, and preferably 20 to 30 inches (25.4 to 88.9 cms, and 50.8 to 76.2 cms, respectively), i.e. considerably lower than that taught by US-A-4,501,047, and which in any case employs a high speed mechanical agitator to dissect the fibre clumps initially.

Thus, in accordance with this invention, there is provided a method of exfoliating a bulk fibrous material and blending the exfoliated fibrous material with a particulate solid to form a substantially uniform solids/fibre blend and which comprises the steps of entraining the bulk fibre in a stream of carrier gas, passing the stream of carrier gas containing the entrained bulk fibre through a turbulent mixing zone to declump the bulk fibre and to provide a flowing carrier gas stream containing a stream of separated fibres entrained therein for blending with said particulate solid, comprising the steps of:

(a) dispensing the bulk fibrous material from a bulk fibre dispensing means into a stream of carrier gas continuously flowing in a conduit;

(b) flowing that carrier gas stream containing the entrained fibrous material through a conduit to a gas/fibre separator; the carrier gas stream containing the entrained fibrous material providing in said conduit a mixed gas/fibre stream having a gas:fibre volume ratio in the range 1,300:1 to 20,000:1 and flowing therein at a gas velocity sufficient to maintain the fibrous material in suspension therein; that carrier gas stream containing the entrained fibrous material, in the course of its passage from the bulk dispensing means to the separator via the conduit, passing through a turbulent mixing zone providing a pressure differential across the turbulent mixing zone in the range 25.4 to 88.9 cms (10 to 35 inches) of water;

(c) separating the entrained fibres from the carrier gas in said separator to provide a fibre recovery of at least 90%, based on the fibre content of the mixed gas/fibre stream flowing through the conduit; and

(d) passing the separated fibre recovered from the separator to a mixer, wherein the particulate solids to be blended with the fibre are added, and wherein the separated fibrous material recovered in the separator is mixed with the particulate material under conditions of agitation to form a substantially uniform solids/fibre blend.

In a modification of the above method the particulate solids to be blended with the fibre may be incorporated into the carrier gas stream containing the entrained fibres prior to the passage of that stream through said conduit and through said turbulent mixing zone, whereby the solids separated from the carrier gas in the separator in step (c) comprises the required substantially uniform blend of solids and separated fibre without requiring the final mixing step (d).

The optimum differential pressure in the turbulent mixing zone varies with the ratio by volume of fibre to carrier gas. Clearly as the ratio increases, a higher differential pressure will usually be required. There is also a need for turbulence to break up and then adequately entrain the fibre in the carrier.

Ratios by volume of carrier gas to fibre in the transfer conduit in the range of 1,300:1 to 20,000:1, preferably 1,500:1 to 5,000:1, have been found suitable. If the ratio by volume of fibre:carrier gas becomes too high, then the mixture becomes very difficult to fluidize and transport in the conduit. On the other hand, if the ratio is too low, e.g. excess volume of carrier gas over fibre, efficiently separating the fibre from the carrier gas, as discussed with respect to later processing steps of the invention, can become a practical limitation on the usefulness of the invention.

Another factor which determines the volume of fibre incorporated into the carrier gas stream is bulk density. In the case of carbon fibres or other synthetic or natural fibres, bulk densities in the range from 16 to 560 $kg/m^3$ (1 to 35 $lbs/ft^3$) preferably 80 to 320 $kg/m^3$ (5 to 20 $lbs/ft^3$), and still more preferably 112 to 240 $kg/m^3$ (7 to 15 $lbs/ft^3$) have been found suitable. If the bulk density becomes too high, e.g. substantially greater than 560 $kg/m^3$ (35 $lbs/ft^3$), as a result of vibration or compression, then the fibres can become so entangled that even passing them through a turbulent mixing zone under a substantial pressure differential can neither sufficiently entrain the fibres in the carrier gas for transferability as a fluid, nor avoid very deleterious attrition to the fibres.

Broadly speaking, there are four methods for producing a mixture of fibres and particulates in accordance with the present invention without first wetting the fibres prior to addition to the particulates. In one, fibres are entrained in the carrier gas, e.g. air, and then particulates are added to the stream. In another, particulates are at least partially added to the carrier gas stream followed by the addition of fibres. In still another, fibre and particulates are at least in part entrained together by separate or joint streams of particulates and fibres into the carrier gas stream. In general, entrained fibres in the carrier gas stream, which can contain some particulates, are separated at least in part from the carrier gas to form a separate fibre stream which is then mixed with dry or wet particulates in a storage zone, and wherein the rate of addition of separated fibres to the storage zone and mixing are coordinated to avoid formation of fibre agglomerates.

Of significance, we have discovered that when particulates of a sufficiently small equivalent spherical diameter are present with fibre entrained in a gaseous carrier, that the particulates at least in part coat the fibre. Once coated, fibres appear to have a lessened tendency to agglomerate and form clumps. An example of a particulate which in sufficient quantities has been found especially to reduce the tendency of fibres to clump is carbon black. Carbon black up to about 5% by weight, and preferably up to 2% by weight as based upon the total weight of fibre and particulate, has been found especially advantageous. Larger quantities above about 5% by weight do not provide a significant decrease in agglomeration over the added expense of using additional carbon black, although larger quantities can be used.

Carbon black suitable for this invention has the following characteristics. It is preferably produced in a refractory-lined furnace reactor by pyrolysis of highly aromatic refinery by-product oils. These oils are subjected to high temperature of about 1,400 to 1,650°C in a reaction zone maintained under conditions producing an endothermic reaction which strips aromatic hydrogen from the aromatic hydrocarbon molecules to leave aromatic nuclei. The resulting reticulated particles in the form of black "smoke" are quenched in a downstream tunnel by water injection at a point several feet from the reaction zone. In this method of manufacturing carbon black, the primary particle size can be closely controlled and produce particle diameters in the range of about 200 to 900 Angstroms. These primary particles are simultaneously bound together to form primary reticulated chains having lengths in the range of about 500 to 30,000 Angstroms.

Preferably, the carrier gas and entrained fibres, with or without added particulates, are passed through a differential pressure that is turbulent enough to both entrain the fibres, break up any agglomerates to ensure uniformity of distribution of individual fibres throughout the carrier gas, and provide a sufficient impetus or force to induce flow through a conduit of the entrained-fibre-vapour stream without blockage, e.g. due to setling. As already indicated, it is a feature of this invention that these objects can be achieved at a relatively low pressure differential, i.e. in the range 10 to 35 inches of water (25.4 to 88.9 cms).

In all of the above methods, a preferred option is to recycle at least a portion of the separated carrier gas after recovery of the entrained solids. The recycle can employ a means for fluid transfer, such as a conduit with or without a separate means for inducing flow therein. The simplest recycle provides fluid connection or communication to combine one stream into that of another. For example, the separated carrier gas stream that is recovered after separation, e.g. ballistically or cyclonically of the entrained solids and which will usually contain no more than 5%, and preferably no more than 2% by weight of residual solids, based on the total weight of the separated carrier gas stream, can be at least in part recycled as a recycle stream by fluid connection between itself and one or more of the upstream carrier gas or solids containing carrier gas streams.

Broadly, there can be four types of carrier gas streams, depending upon how the method of the present invention is operated: one consisting of gas having less than 0.1% by weight of solids therein, as based on the total weight of stream including solids, such as air; one comprising gas and fibre; one comprising gas and particulates; and finally, one comprising gas, fibre, and particulates. The general ratio by volume of carrier gas:solids (wherein the solids comprise fibres, particulates or both) is in the range 1,300:1 to 20,000:1, and preferably 1,500:1 to 5,000:1, and most preferably 1,800:1 to 3,000:1. An entrained fibre and particulate containing stream can contain from 10% to 50% by weight, preferably 30% to 45% by weight solids, based upon the total weight of the stream, i.e. solids plus gas. In general, the volume of fibres or other solids fluidized in the carrier gas stream must not be so high as to preclude transfer in a conduit under a pressure differential in the range of 10 to 35 inches of water (25.4 to 88.9 cms) in a conduit having an inside diameter in the range of 1 to 4 inches (2.54 to 10.16 cms).

The invention is further described with reference to the accompanying drawings, in which:

Figure 1 is a side elevation view, partially in cross-section, disclosing an apparatus for carrying out a method according to this invention;

Figure 2 is a top plan view along line B-B of Figure 1;

Figure 3 is a top plan view along line A-A of Figure 1;

Figure 4 is a side elevation view along line C-C of Figure 1;

Figure 5 is a side elevation view, partially in cross-section, disclosing a slightly modified version of the apparatus of Figure 1;

Figure 6 is a side elevation view, partially in cross-section, disclosing an alternative embodiment to Figure 1 and providing a carrier gas recycle system;

Figure 7 is a side elevation view, partially in cross-section, disclosing a modified version of the apparatus of Figure 6;

Figure 8 discloses an alternative embodiment of bulk fibre storage container having a novel lower section;

Figure 9 is a top planar view along line 9-9 if Figure 8; and

Figure 10 is a cross-section along line 10-10 of Figure 9.

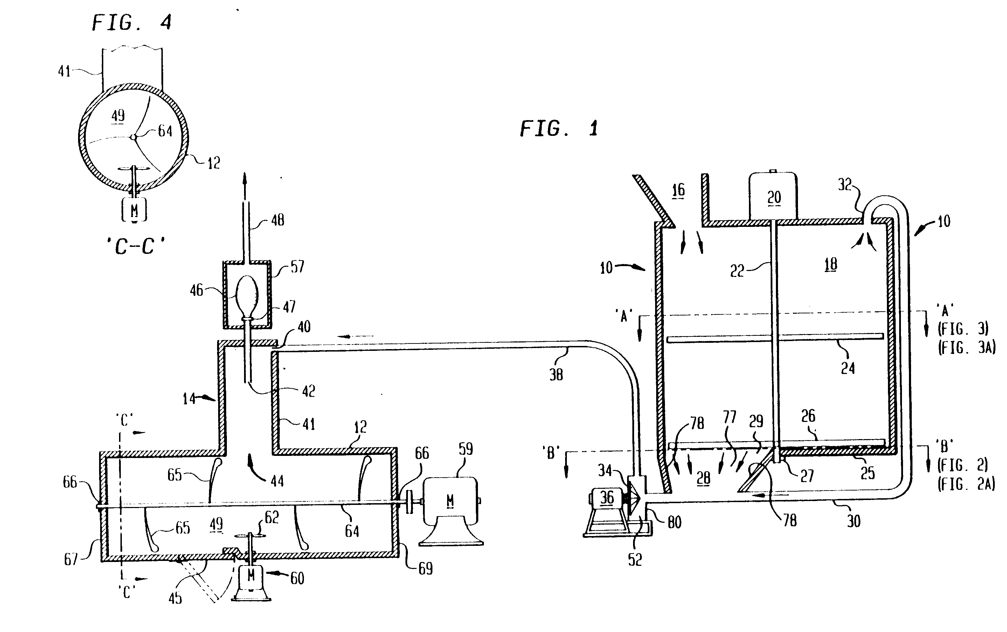

As shown in Figure 1, there is disclosed a fibre-particulates blending apparatus comprising a fibre fluidizer 10, a mixer 12 and a separator 14. In more detail, the fibre fluidizer 10 comprises a feed hopper 16, storage zone 18, a motor 20, drive shaft 22, bar or rod stirrer 24, double rod stirrer 26, bearing 27, exit chute 28, conduit 30, conduit connection 32, impeller fan 34, and conduit 38. Separator 14 comprises inlet 40, housing 41, vapour outlet 42, solids outlet 44, bag filter 46, filter zone housing 57, and conduit 48 to a low presure zone (not shown). Mixer 12 comprises an inlet 44, blend outlet 45, a mixing zone 49, a primary motor 59, a secondary motor 60, a secondary stirrer 62, shaft 64, bearing 66 and primary stirrer blades 65.

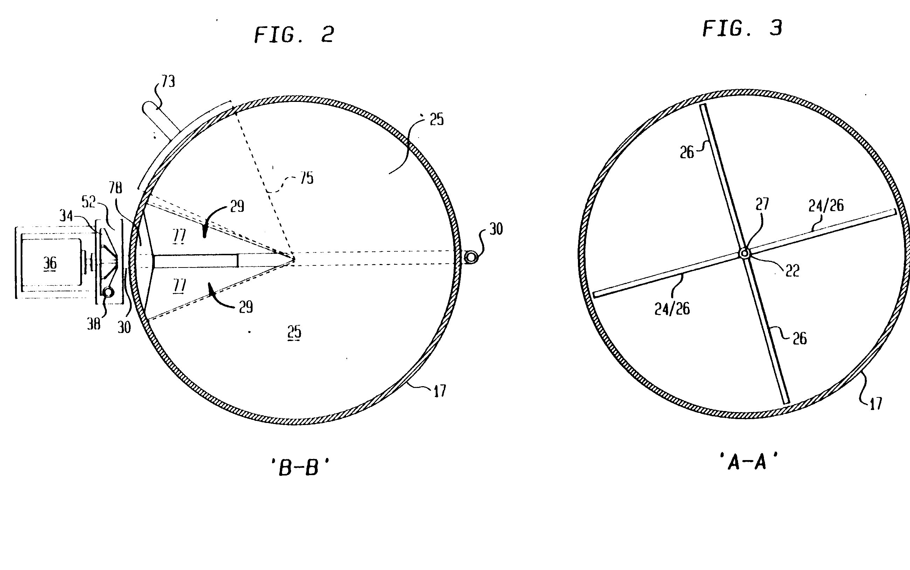

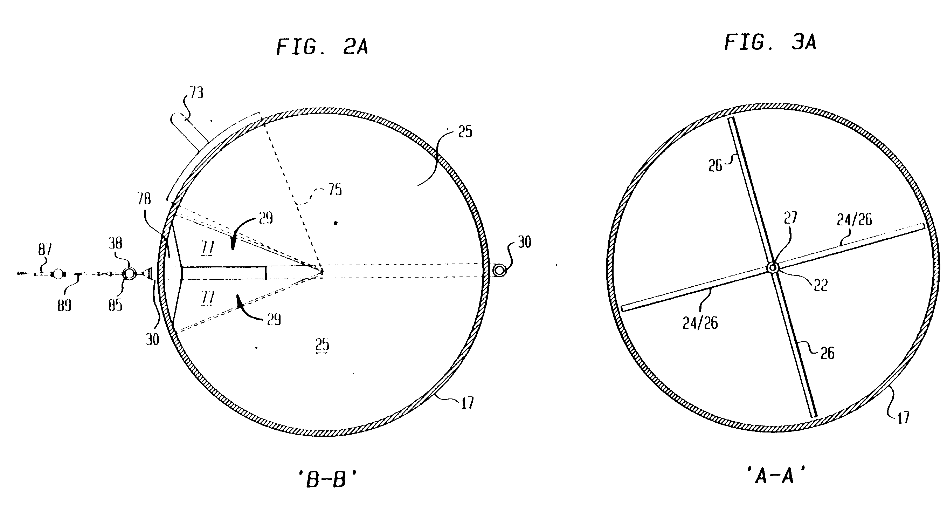

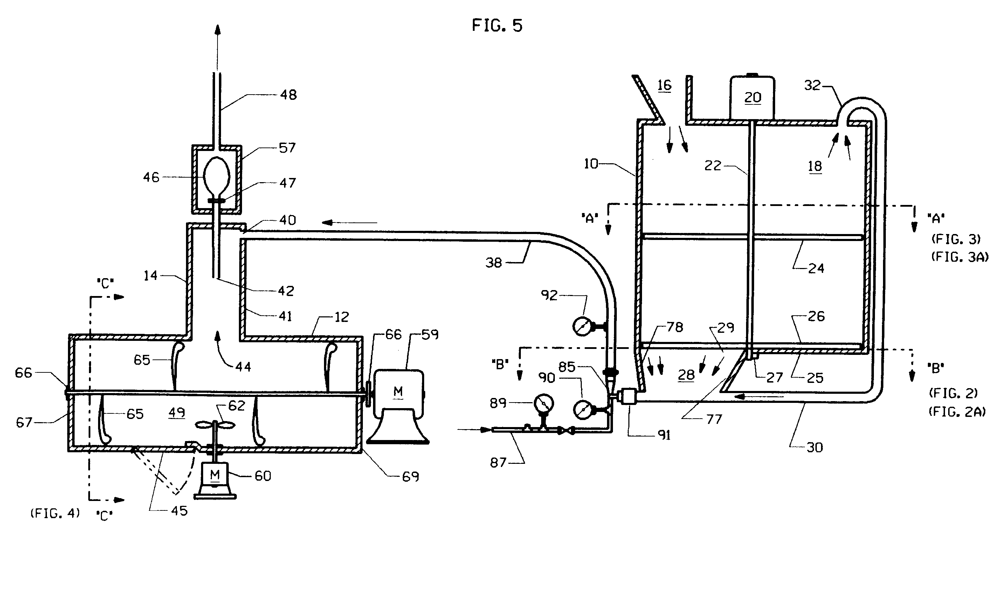

Briefly, the operation of the apparatus disclosed in Figure 1 is as follows. Carbon fibres are introduced into feed hopper 16 and drop into fibre storage zone 18. By rotating the drive shaft 22, motor 20 maintains the carbon fibres in an easily flowing state as a result of rod 24. It is to be noted that in most operating circumstances rod 24 is not critical and the apparatus can be run with or without rod 24. Fibres, such as carbon fibres, rest on bottom 25 of storage zone 18. Rod 26 shown in top plan view in Figures 2 and 3 is sufficiently close to the bottom 25 so as to permit sufficient clearance to induce the fibres to move around until they are in alignment with exit chute 28 which has a pie shaped opening 29.

The adjustable pie shaped opening 29 through valve wedge or plate 75 shown in Figure 2 is adjustable by moving valve wedge 75 with slide pull 73 to give an angle generally in the range of 5° to 90°. If the pie shaped opening is too open then the conduit plugs. Chute walls 77 and 78 provide a pathway into the interior of conduit 30 that leads to motor housing 80. If the pie shaped opening 29 is too small then an insufficient number of fibres fall through. The clearance between rod 26 and bottom 25 has been found in practice preferably to be in the range 6.35 to 12.7 mm ($\frac{1}{4}$ to $\frac{1}{2}$ inch) for carbon fibres having a length of from 50 microns to 12.7 mm ($\frac{1}{2}$ inch) and a diameter of from 5 to 30 microns. For fibres having median lengths of from 250 to 550 microns and diameters of from 5 to 30 microns, the optimum clearance is about 9.53 mm (3/8 inch). Rod 26 will usually be driven at about 1 to 100 revolutions per minute. With decreasing rotational speed, there is a slowing in fibre flow through opening 29.

From the exit chute 28 the fibres enter conduit 30 and are entrained in a stream of carrier gas (air) drawn through the conduit 30 by an impeller fan 34 driven by motor 36. At the top of fibre fluidizer 10 a fluid tight connection 32 to the upstream end of the conduit 30 ensures flow of fibres entrained near the top of the storage zone 18 into conduit 30 without escaping into the environment by virtue of the lower pressure in conduit 30 as compared to that in storage zone 18.

Characteristically, and in accordance with the present invention, the impeller casing 52 provides a turbulent mixing zone 80 in which the entrained fibres are subjected to turbulent mixing under relatively mild, in comparison with the prior art, conditions namely a pressure differential, as measured between the impeller casing inlet and the impeller casing outlet, in the range 25.4 to 88.9 cms of water (10 to 35 inches).

From the impeller fan 34, air containing the entrained fibres moves through a delivery conduit 38 at a fluid flow rate sufficient to maintain a homogenous mixture of air and fibre, i.e. at a rate such that the fibre does not settle out or cause blockage within conduit 38, to a separator 14. For this purpose we have found that fluid flow rates of 304.8 to 1,828.8 m/min. (1,000 to 6,000 ft/min.) work satisfactorily. The pressure diferential over the length of the conduit may be in the range 25.4 to 88.9 cms (10 to 35 inches), preferably 50.8 to 76.2 cms (20 to 30 inches). A suitable piece of equipment for this purpose, i.e. as the motor driven impeller 34, is a 1.2 horse power blower motor sold by Breuer Electric of Chicago, Illinois. However, generally, any impeller, either open or closed, can be used, although an open impeller is preferred because it has a smaller tendency to become clogged with fibres.

Separator 14 is basically a cyclone which uses acceleration of the fibres toward the walls 41 of the separator to separate the fibres from the carrier gas. For this purpose the carrier gas containing the entrained fibres entering through inlet 40 is induced to swirl causing the fibres to be moved toward the walls 41 and then to move down through solids outlet 44 into the mixing zone 49 of a mixer 12. Separated carrier gas leaves through carrier gas outlet 42 to a filter 46 contained in a filtering zone housing 57 and then through a vent conduit 48 to a low pressure area (not shown). A bag filter 46 is attached to the gas outlet conduit 42 by means of pinch clamp 47. The low pressure in conduit 48 can be provided by a vacuum pump, for example.

Instead of having the impeller fan 34 located where it is, it is possible to have a vacuum system attached to conduit 38 to induce flow in the directions indicated by flow arrows. It is also possible to have an additional motor to induce flow gas downstream of conduit 38 in addition to or to the exclusion of motor 36 driving the impeller 34.

There is some desirability to avoid having impeller fan 34 in the location disclosed because it does cause some attrition and wear of the fibres. As an alternative an eductor 85 (shown in Figure 5) may be used. In this case, air or other gas entering through conduit 87 under pressure acts as the motive force. Pressure gauges 89, 90 and 92 permit one to select an appropriate pressure to ensure proper flow of carrier gas. Fibre enters the lower pressure inlet 91 of the eductor 85 under the influence of the motive gas stream which enters through conduit 87. The two streams combine and flow into conduit 38. Suitable pressures are, for example, 34.5 to 138 kPa (5 to 20 psig), preferably 48.3 to 82.7 kPa (7 to 12 psig) for gauge 90, and 5.2 to 20.7 kPa (0.75 to 3 psig), preferably 6.9 to 13.8 kPa (1 to 2 psig) for gauge 92.

Other means of dispersing the carbon fibres into the carrier gas can be used, for example by brushing through a screen or sieve, or forcing the fibres through a vibrating sieve, into a flowing air stream.

In the mixer 12, the blend of separated fibres and matrix material is stirred by blades 65 mounted on shaft 64 driven by motor 59 and supported by bearings 67 and 69 at the opposite ends of the mixer 12. The resulting blend can be removed from the mixing zone 49 through outlet 45. The dotted outline shows the blend outlet 45 open and the solid lines show the blend outlet 45 closed. Optionally a second motor 60 provides additional stirring.

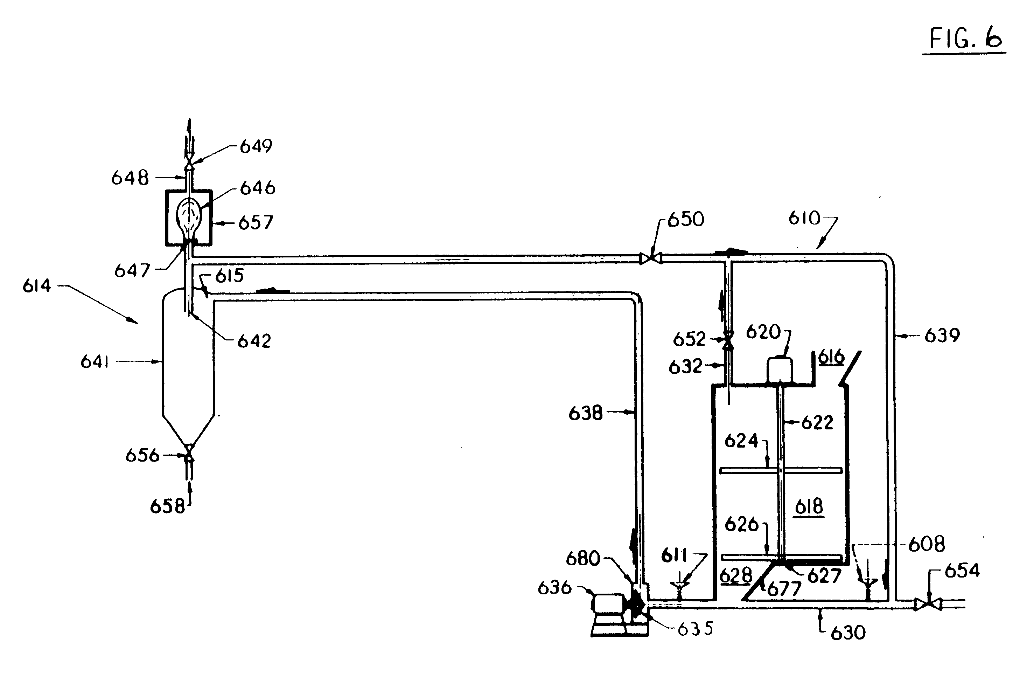

We have found that still further benefits in processing fibrous material in accordance with this invention are made possible by recycling a portion of the separated carrier gas stream from the separator to the fibre container. Such an arrangement is shown in Figure 6. The amount of recycle, as based on the total volume of carrier gas passing the chute 628 is preferably at least 10%, more preferably at least 25%, and can be as high as 100%, i.e. complete recycle. More usually, however, the volume of recycle will be 10 to 90%. The percent by weight of solids in the recycle stream is generally less than about 5% by weight, based on the total weight of solids entrained in the carrier gas and entering the separator 641.

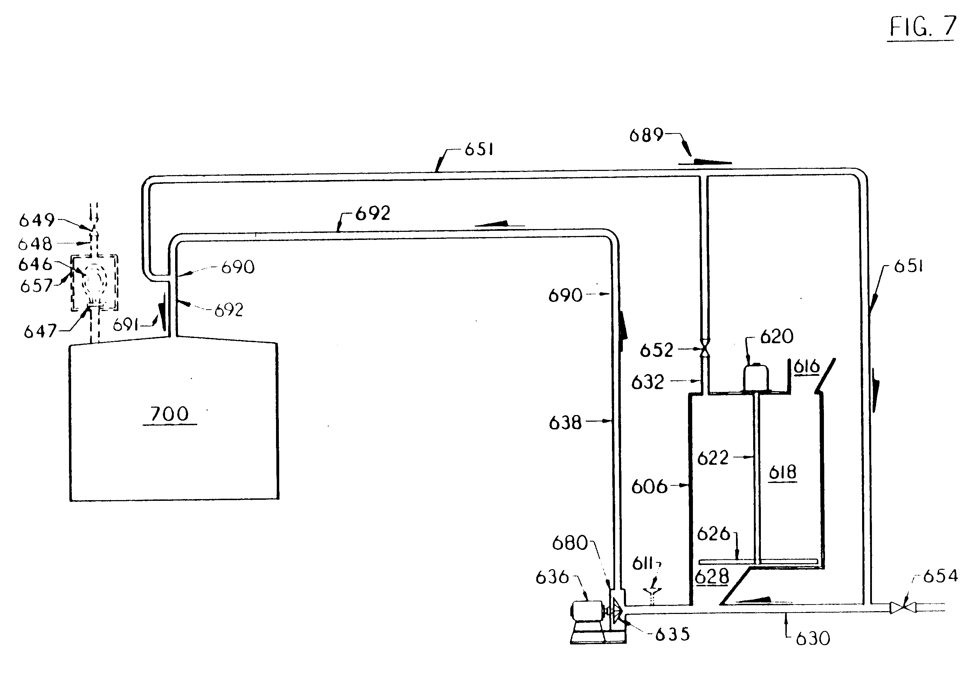

Among the benefits of recycle, are a slightly higher input pressure to the impeller 635; a reduced pressure to the filter bag 646; the recycle of a portion of very fine particles which further reduces the tendency of the fibres to agglomerate. Also using a recycle sream it is possible also to disperse in the carrier gas stream the particulates that make up the matrix thereby to avoid the necessity for a downstream mixer, i.e. the mixer 12 shown in Figures 1 and 5. Each of these advantages will be discussed in more detail with respect to Figures 6 and 7.

Referring to Figure 6, the apparatus there shown comprises a fibre fluidizer 610, and a separator 614. In more detail, the fibre fluidizer 610 comprises a feed hopper 616, a storage zone 618, a motor 620, a drive shaft 622, bar or rod stirrer 624, double rod stirrer 626, bearing 627, exit chute 628, conduit 630, conduit connection 632 containing a valve 652, impeller fan 635, impeller 636, conduit 638, conduit 639, particulate inlets 608 and 611 (shown in phantom outline at optional locations), valve 650 and bleed valve 654. Separation vessel 614 comprises an inlet 615, a vapour outlet 642, a vessel 641, a solids outlet 658, a filter 646, a filtering zone housing 657, a conduit 648 with a valve 649 to a low pressure area (not shown). Bag filter 646 is attached to the carrier gas outlet conduit by means of a pinch clamp 647. Low pressure in conduit 648 can be due to a vacuum pump, for example in those situations where it is necessary, as for example, when valve 650 is closed.

Instead of having an impeller fan 635 located as shown in Figure 6, it is possible to have a vacuum system attached to conduit 648 to induce gas flow in the directions indicated by the arrows. It is also possible to have an additional motor to induce flow of carrier gas downstream of conduit 648 in addition to or to the exclusion of the impeller 636.

The apparatus of Figure 6 works in substantially the same way as the one described in Figure 1, except for the differences relating to the recycle system and matrix material inlets 608 and 611 (shown in phantom outline). The recycle system includes conduits 639, 630 and 632. In 639, there is a valve 650 which can turn off the recycle. An optional bleed valve 654 in conduit 630 permits fine tuning and optimization of the fibre fluidizer system. The matrix material inlets 608 and 611 can, for example, involve rotary valves, all or none of which can be used. However, with these matrix material inlets, it is possible to use a plug flow mixing process to disburse fibrous material into particulate matrix material without use of a separate mixing zone such as employed in Figure 1. Optionally, matrix material may be added to conduit 638 downstream of impeller 636 and impeller fan 635. However, no such particulate feed input is shown in any of the Figures.

Briefly, operation of the apparatus in Figure 6 is as follows. Fibrous material is introduced into hopper 616 which leads to storage zone 618. During loading of fibrous material to hopper 616, valve 652 in conduit 632 is open and valve 650 in conduit 639 is closed. To permit escape of pressurized gases during loading of hopper 616, valve 649 in conduit 648 downstream of bag filter 646 is open.

The fibre entering storage zone 618 is permitted to fall through an opening which leads to exit chute 628 having chute walls 677 in fluid communication with the interior of conduit 630. Essentially as described in connection with Figure 1, the rods 624 and 626 driven by the motor 620 via the shaft 622 maintain the fibrous material in a substantially fluid and free flowing condition. Usually the shaft 622 will be driven at about 10 to 50 r.p.m. Gnerally, the feed rate through chute 628 is controlled, so that the bulk density of fibre entering conduit 630 is in the range 16 to 560 kg/m$^3$ (1 to 35 lbs/ft$^3$).

Although a pie shaped opening has been found particularly advantageous in the feed hopper 616, especially an adjustable pie shaped opening, any opening which will permit the free fall of fibres may be used. It is essential merely that the fibres fall freely and be aspirated into the stream of material flowing in conduit 630 past the opening into conduit 630 defined by chute 628.

During loading, flow of carrier gas with entrained fibres will move through conduit 632 past open valve 652 then through conduit 639 past exit chute 628 into motor housing 680, then under the impetus of impeller 636 through conduit 638 into inlet 615. During loading, recycle is turned off by closing valve 650.

In operation, valve 652 may be open, but is preferably closed and 650 is open. Optionally, valve 649 may be open or partially closed.

Employing matrix feed input 608 and/or 611, matrix material may be introduced directly into the fibrous material without the need of a separate mixing zone.

Separator 614 operates as a conventional cyclone. Material consisting of a mixture of gases, particulates and fibres enters inlet 615 to cyclone 614. Within cyclone walls 641, the mixture is induced to flow in a cyclonic fashion causing the heavier components to concentrate along the walls and under the influence of gravity to fall to the bottom, where they can be removed through conduit 658 containing a valve 656. Valve 656 may be any means for opening and closing to permit the transfer of particulates and fibres thorugh the bottom of separator 614 into conduit 658. The material consisting of a mixture of fibres dispersed in matrix material may then be transferred to a storage zone for later use or introduced directly into a processing line, such as one employing an extruder. The gas separated from the mixture of fibres, matrix material and carrier gas is induced to enter outlet 642 for transfer back through conduit 639. Some of the gas may enter filter housing 657 by first passing through a filter 646 then into conduit 648 and through valve 649 to a low pressure zone (not shown).

Other methods for inducing flow of carrier gas in conduit 630 may be used. Among these is one already discussed with respect to Figure 5.

Referring to Figure 7, like numbered elements are the same as in Figures 6 and 7. In Figure 7, there is disclosed an alternative separation method which may be used alone, or in addition to that shown in Figure 6.

Briefly, the operation of the fibre fluidizer of Figure 7 is as follows: fibre from storage zone 618 of hopper or storage container 606 enters conduit 630 through chute 628 and is dispersed, e.g. by aspiration, into a moving stream of carrier gas moving in conduit 630 in the direction shown by the arrows. Matrix material may be introduced through matrix material input 611 shown in phantom outline to indicate that it is optional. Other locations for matrix material input are possible, e.g. material inputs 611 and 608 shown in phantom outline in Figure 6.

Material entering impeller housing 680 is induced to move through conduit 638 by impeller 636. The speed of the mixture of fibre, matrix material and carrier gas moving through conduit 630 is in the range of about 304.8 to 1,828.8 m/min. (1,000 to 6,000 ft/min.). Rotation rates for impeller blades of impeller motor 636 are preferably in the range 12,000 to 25,000 r.p.m. Due to the inertial character of a moving body the tendency of which is to avoid changes in direction, the heavier materials or matrix material and fibre tend to continue in a straight line past the conduit take-off point leading to conduit 651. The carrier gas preferentially leaves ballistic separation zone 690 through conduit 651 along the direction shown by arrow 689. The particulates and fibrous material continue and enter storage zone 700.

The blend of fibrous and matrix material recovered through conduit 692 is taken to a storage zone 700 or alternatively a cyclone separator such as disclosed in Figure 6, or even another ballistic separator zone.

The advantage of this second embodiment is that a very simple method separation, namely a ballistic separation, neatly fits in with a recycle system.

During loading, valve 652 is open so that entrained fibres can be drawn up through conduit 632 into conduit 651. Once hopper 616 is filled and closed, for environmental reasons, then valve 652 may also be closed. Recycle carrier gas from conduit 651 may be fine tuned by a bleed valve 654 in conduit 630.

In summary, the method of the instant invention comprises the following steps. Firstly, fibres, e.g. having a bulk density in the range of about 16 to 560 kg/m$^3$ (1 to 35 lbs/ft$^3$), are passed through a pressure differential of from 25.4 to 88.9 cms water (10 to 35 inches) sufficient to substantially separate fibres into only loosely interacting components which are thereby entrained in a carrier stream so as to result in a fibre fluidized gas mixture. There is a practical limit to the bulk density determined at least in part upon the transferability of the fibre both through an opening into a conduit and then through such conduit. Also, if the bulk density is too high due to compaction from vibration or compression, a fibre can become so tightly entangled that transfer even through a turbulent pressure differential will be insufficient to disentangle them.

The process of entraining the fibres in the carrier gas stream can be by gravity flow and aspiration, which aspiration results from movement of the carrier gas past an opening. An example of such a movement is flow of the carrier gas past the opening of chute 28 and 628. Preferably, the movement of fibre through that opening is as a result of agitation and gravity or gravity sifting through a sieve to ensure that the fibres as they exit from the opening are in only loosely interacting condition so that they may be aspirated into and transported in a carrier gas as a result solely of the movement of the carrier gas itself without any other energy inputs such as, for example, high shear stirring. The speed of the carrier gas stream as it passes the opening of chutes 28 or 628 is in the range about 304.8 to 1,828.8 m/min. (1,000 to 6,000 ft/min.), more preferably in the range 609.6 to 1,219.2 m/min. (2,000 to 4,000 ft/min.), and most preferably in the range 762 to 914.4 m/min. (2,500 to 3,000 ft/min.). The rate at which fibrous material is pased through the pressure differential is such as to result in a ratio by volume of gas to fibre in the range of about 20,000:1 to 1,300:1, preferably in the range of about 5,000:1 to 1,500:1, and most preferably in the range of about 3,000:1 to 1,800:1.

The mixture of entrained fibres within the carrier gas is then transferred to a separating zone where fibre and carrier gas are separated into a carrier gas stream with no more than 5% by weight of entrained solids and a fibre stream with at least 90% by weight of entrained solids. Examples of separation methods are: cyclonic separation, e.g. like that produced in a cyclone separator; or ballistic separation. Separated fibres may then be mixed in a separate zone into a dry or wet matrix material in such a way as to coordinate speed of mixing or agitation of the particulates with the rate of addition of the fibre stream so as to avoid any significant balling.

Alternatively, instead of separating the fibres from the carrier gas stream and then introducing them into the matrix material, we have discovered that it is possible by means of a plug flow system to introduce the matrix particulates into the entrained fluidized fibre-containing stream. "Plug flow" throughout this specification and claims means that the particulates and carrier gas flow through the equipment and conduit in a progressive manner without significant, e.g. greater than 10% by weight, back mixing.

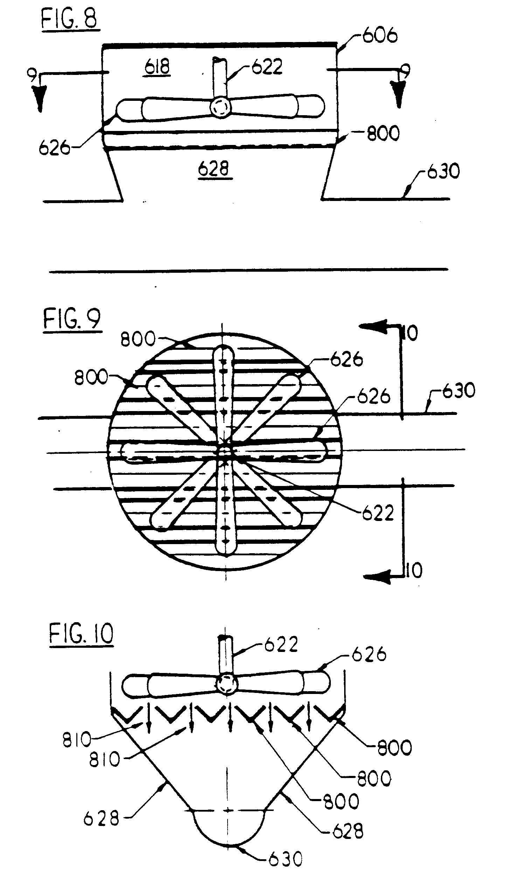

Referring to Figures 8, 9 and 10, there is disclosed an alternative embodiment to storage container 606. In Figure 8, there is a storage container 606 having a drive shaft 622, 8 stirrers 626 connected to the drive shaft 622, a series of 90° angle irons 800 spaced below rod stirrer 626 and across the bottom of container 606, and chute 628 leading to conduit 630. In Figures 9 and 10, angle irons 800 are shown to be disposed substantially parallel to conduit 630 with spaces between angle irons 800. Arrows 810 show the path for fibres which under the impetus of rod stirrers 628 fall between angle irons 800 into chutes 628 and ultimately pass into conduit 630.

Though it is possible to have the angle irons 800 at a variety of angles relative to the longitudinal axis of conduit 630, we believe it preferable to have the angle irons 800 substantially parallel to conduit 630.

In this alternate embodiment shown in Figures 8, 9 and 10, the total bottom of storage container 606 is open. Having angle irons 800 with their pointed side directed downward helps avoid ridging that might otherwise occur. The space between angle irons 800 increase as one moves downwardly between angle irons 800.

We have found that the rate of feeding through the grating consisting of an array of angle irons 800 as shown in Figures 8, 9 and 10 can be very accurately controlled depending upon the rate of revolutions per minute of stirrer rods 626. For example, carbon fibres having an average length of 300 microns, an average diameter in the range of 10 to 20 microns, and an intrinsic density of fibre of about 1.6 will in an uncompacted state from storage zone 618 feed into conduit 630 at a rate of about 0.25 kg/min/cm$^2$ (0.35 lbs/min/in$^3$) of open space when stirrer rods 626 rotate at six revolutions per minute. Stirrer rods are roughly 12.7 mm (½ inch) in diameter. They are cylindrical and they reach to within 12.7 mm (½ inch) of the walls of storage container 606. They are spaced above angle irons 800 by about 9.5 mm (3/8 inch). Angle irons 800 are at 90° and each side of the angle iron is roughly 19 mm (¾ inch). The spacing between angle irons is roughly 6.3 mm (¼ inch).

EXAMPLES

Example 1

This Example is directed to the steps usually taken in the formation of brake pads. The Example sets forth typical kinds of resins and the steps taken in adding asbestos fibres to a resin which is then moulded and machined to form brake pads.

A brake lining converts kinetic energy into heat and then dissipates it to the surrounding equipment and environment. Brake linings are usually made of a resin matrix containing other components and a plethora of additives. The components and additives may include asbestos fibres, sulphur, zinc oxide, barytes, steel wool, graphite, metal fibres, zinc dust, iron oxide and rottenstone. Asbestos is used as a major component because of its good thermal stability, low cost, high friction and good reinforcing properties. A typical pad comprises, in weight percent of total pad weight: 22% acrylonitrile/butadiene copolymer, 49% asbestos, 2% sulphur, 11.5% barytes, and 11.5% rottenstone. Blending of the components and additives involves charging to a Littleford mixer where they are stirred together. The blended mix is then formed into briquettes hot pressed at 160 to 180°C for 5 to 15 minutes to form brake pads. The pads are then baked at 220 to 300°C for 4 to 8 hours. The baked pads are then drilled and ground to tolerances to make the finished brake pad.

Sometimes synthetic resins such as phenolics or cresylic resins are used usually modified with drying oils, rubber, and epoxies.

The particle size of the synthetic resin in spherical equivalents is preferably in the range of about 0.1 to 250 microns and more preferably in the range of about 1 to 100 microns.

Example 2

In this Example there is a discussion of the apparatus, and the carbon fibres used to prepare brake pads using a dry blender. The key point of this Example is that no matter how well dispersed the carbon fibres are prior to addition to the mixer, if they are added as an unfluidized collection of fibres, e.g. as a cluster of fibres, then the balling phenomena occurs.

A typical batch of brake pad mixture would be made by weighing and charging the weighed components into a Littleford dry mixer. The mixing equipment typically is a Littleford Brothers mixer which is a horizontal cylinder. Inside this horizontal cylinder, a series of ploughs turn around inside the circumferential surface and there is a high shear chopper entering from the lower side at a 45° angle. After each of the components have been charged to the unit, both the ploughs and the chopper are turned on for about 5 minutes which thoroughly mixes the dry components into a homogenous mix, except when an amorphous Ashland carbon fibre is included. Carbon fibres have a propensity to form balls and not disperse. The reason for the balling is thought to be caused by the uniformity of the particles, the roughness of the surface, and the stiffness of the fibre. Since the particles are subject to static charge, this phenomenon may play a part in the initial cohesiveness of the carbon fibre particles. When the carbon fibre balls form in the mix, the blend is unusable. When processed into brake pads, it shows as discernible spots on the wearing face. This cases two problems: the fibres are not arranged to give maximum strength; and the "spots" are harder and more abrasive than the surrounding matrix. These hard spots casue grooves to be worn in mating surfaces.

Example 3

This example will disclose that if a fluidizing step is employed, then carbon fibre spheres do not appear in the finished brake pads.

This description shows how the carbon fibres are added to the brake mix to avoid the bailing of the carbon fibres. All other components are added to the Littleford mixer. The carbon fibre portion of the mix is added to the storage hopper of the fibre fluidizer with the impeller fan running. During the charging, the bottom valve is closed. The primary reason for this configuration is to reduce the amount of dust emanating from the hopper during the carbon fibre charging. With both the plough-like agitator and the high-speed chopper running in the Littleford mixer, the storage hopper agitator is started and the valve on the bottom of the storage hopper is opened sufficiently to establish the correct addition rate. The bottom rod sweep on the hopper agitator carries the fibre over the pie-shaped opening where it falls into a chute. This opening does not necessarily have to be pie-shaped. Any opening that will allow the fibre to fall through will suffice. This opening could be a sieve or screen. The carbon fibre falling through the chute contacts the moving air stream where it mixes with the air and is carried through an impeller fan. The fluidized carbon fibre is then carried to a separator (cyclone) mounted on the Littleford mixer. The cyclone does not have a cone shaped bottom, but is straight sided. The carbon has a tendency to bridge and, if the angle of the sides in insufficiently inclined, the fibre will clog the outlet. The fibre drops out of the cyclone into the agitated brake pad mix in more or less individual fibres. These fibres are coated and mixed with the other components before they are able to agglomerate into balls or clumps. After all of the fibres have been blown in, the mix is agitated for a few minutes, the agitators are shut down and the brake mix is discharged through the solids outlet in the bottom of the mixer. The fluidizing air plus the air necessary for bearing purge is exhausted through the tube in the cyclone then into a filter bag to retain particulates of dust and/or brake mix components.

In place of the motor driven fan, an eductor as shown in Figure 5 may be used. The eductor uses a motive fluid of air to cause a low pressure area which sucks in fibre and air. This fluidized fibre is then conveyed to the mixer in much the same manner as with the fan.

In this specification "equivalent spherical diameter" of a particle means the diameter of spherical particle having the same surface to volume ratio as the particle in question.

Specific compositions, methods or embodiments discussed are intended to be only illustrative of this invention, variations therein will be apparent to persons skilled in the art without departing from the scope of the invention as disclosed herein. For example, instead of a pie-shaped opening, other shapes are possible. We have found that a circular opening having a sieve through which fibre must pass can also work. Preferably, the sieve has openings in the range of about 10 to about 2,000 microns and will vary somewhat depending upon median fibre dimensions. As another example, commercially available wedge wire screen or rods can be used in place of angle irons 800.

## Claims

1. A method of exfoliating a bulk fibrous material and blending the exfoliated fibrous material with a particulate solid to form a substantially uniform solids/fibre blend which comprises the steps of entraining the bulk fibre in a stream of carrier gas, passing the stream of carrier gas containing the entrained bulk fibre through a turbulent mixing zone to declump the bulk fibre and to provide a flowing carrier gas stream containing a stream of separated fibres entrained therein for blending with said particulate solid, characterised by the steps of:
   (a) dispensing the bulk fibrous material from a bulk fibre dispensing means (16, 18, 20, 22, 24, 26, 27, 28, 616, 618, 620, 622, 624, 626, 627, 628) into a stream of carrier gas continuously flowing in a conduit (30;630);
   (b) flowing that carrier gas stream containing the entrained fibrous material through a conduit (38;638) to a gas/fibre separator (14;614); the carrier gas stream containing the entrained fibrous material providing in said conduit (38;638) a mixed gas/fibre stream having a gas:fibre volume ratio in the range 1,300:1 to 20,000:1 and flowing therein at a gas velocity sufficient to maintain the fibrous material in suspension therein; that carrier gas stream containing the entrained fibrous material, in the course of its passage from the bulk fibre dispensing means (16 etc) to the separator via the conduit (30;630), passing through a turbulent mixing zone (80;680 providing a pressure differential across the turbulent mixing zone (80;680) in the range 25.4 to 88.9 cms (10 to 35 inches) of water;
   (c) separating the entrained fibres from the carrier gas in said separator (14;614) to provide a fibre recovery of at least 90%, based on the fibre content of the mixed gas/fibre stream flowing through the conduit (38;638); and
   (d) passing the separated fibre recovered from the separator (38) to a mixer (12), wherein the particulate solids to be blended with the fibre are added, and wherein the separated fibrous material recovered in the separator (14) is mixed with the particulate material under conditions of agitation to form a substantially uniform solids/fibre blend.

2. A method of exfoliating a bulk fibrous material and blending the exfoliated fibrous material with a particulate solid to form a substantially uniform solids/fibre blend and which comprises the steps of entraining the bulk fibre in a stream of carrier gas, passing the stream of carrier gas containing the entrained bulk fibre through a turbulent mixing zone to declump the bulk fibre and to provide a flowing carrier gas stream containing a stream of separated fibres entrained therein for blending with said particulate solid, characterised by the steps of:
   (a) dispensing the bulk fibrous material from a bulk fibre dispensing means (16, 18, 20, 22, 24, 26, 27, 28; 616, 618, 620, 622, 624, 626, 627, 628) into a stream of carrier gas continuously flowing in a conduit (30; 630);
   (b) incorporating into the carrier gas stream containing the entrained fibres the particulate solids to be blended with the fibre, thereby to establish carrier gas stream containing both solids and fibre;

(c) flowing that carrier gas stream containing the entrained solids and fibre by means of a conduit (38; 638) to a gas/solids separator (14; 614); the carrier gas stream containing the entrained solids and fibrous material providing in said conduit (38; 638) a mixed gas/solids stream having a gas:total solids volume ratio in the range 1,300:1 to 20,000:1 and flowing therein at a gas velocity sufficient to maintain the solids and fibrous material in suspension therein; that carrier gas stream containing the entrained solids and fibre, in the course of its passage from the bulk fibre dispensing means (16 etc) to the separator (14;614) via said conduit (30;630) passing through a turbulent mixing zone (80; 680) providing a pressure differential across the turbulent mixing zone (80; 680) in the range 25.4 to 88.9 cms (10 to 35 inches) of water;

(d) separating the entrained mixture of solids and fibrous material from the carrier gas in said separator (14; 614) to provide a total solids recovery of at least 90%, based on the total solids content of the mixed gas/solids stream flowing through the conduit (38; 638), and thereby to recover from the separator a substantially uniform blend of said solids and said fibre.

3. A method according to claim 1 or 2, characterised in that step (a) comprises feeding the bulk fibre to a container (10;606,618), maintaining the bulk fibre therein in a fluidised condition, and delivering the fluidised fibres through a chute (28;628) in the bottom of the container into the conduit (30;630) located therebelow.

4. A method according to claim 1, 2 or 3, characterised in that after separation of the entrained solids or solids and fibre, as the case may be, from the carrier gas in the separator (14; 614) at least a portion of the carrier gas is recycled.

5. A method according to claim 1, 2, 3 or 4, characterised in that the velocity of the carrier gas stream in said conduit (38; 638) is at least 304.8 m/min. (1,000 ft/min.).

6. A method according to claim 5, characterised in that said velocity is in the range 304.8 to 1,828.8 m/min. (1,000 to 6,000 ft/min.).

7. A method according to any one of claims 1 to 6, characterised in that the volume ratio of carrier gas:solids or solids and fibre, as the case may be, in said conduit (38; 638) is in the range 1,800:1 to 3,000:1.

8. A method according to any one of claims 1 to 7, characterised in that the turbulent mixing zone (80; 680) is located upstream of the conduits (38; 638) and is provided by a motor driven impeller fan (34; 635) or a gas driven eductor (85).

9. A method according to any one of claims 1 to 8, characterised in that the fibrous material comprises carbon fibre.

10. A method according to any one of claims 1 to 9, characterised in that the particulate solids to be incorporated into the solids-fibre blend comprise particles of a sufficiently small equivalent spherical diameter to coat the fibre to lessen any tendency toward subsequent agglomeration.

11. A method according to claim 10, characterised in that the particulate material added to the blend to coat the fibres is carbon black.

12. A method according to claim 11, characterised in that the carbon black is added in an amount of up to 5% by weight, based on the combined weight of fibre and solids making up the blend.

13. A method according to any one of claims 1 to 9, characterised in that the particulate solids to be incorporated into the solids-fibre blend comprises a particulate mouldable matrix material, thereby to form a substantially homogeneous mouldable blend of fibres and matrix material.

14. A method according to claim 13, characterised in that the solids-fibre blend is a mouldable brake pad composition.

15. Apparatus for blending a fluidised fibre stream with a particulate solids material to form a substantially homogenous blend of solid particles and fibres, characterised in that the apparatus comprises in combination:

(i) a fibre fluidiser (10) for containing a bulk supply of the fibrous material to be blended with the particulate solid material;

(ii) agitation means (20-26) in the fluidiser (10) for maintaining the bulk fibrous material in a fluidised state;

(iii) a feed conduit (30) positioned below said fluidiser (10) for receiving therefrom a stream of fluidised fibre;

(iv) an impeller means (34-36;85) for drawing a stream of carrier gas through the feed conduit (30) to entrain the fluidised fibres fed thereto from the fluidiser (10) and operable to convey those fibres suspended in the carrier gas through a transfer conduit (38) to a gas fibre separator (14) for subsequent separation of the entrained fibres from the carrier gas and admixing with the particulate solids;

(v) the transfer conduit (38) conveying the stream of carrier gas containing the entrained fibres from the impeller means (34-36;85) to a gas-fibre separator (14) at a velocity sufficient to maintain the fibres in suspension;

(vi) the gas-fibre separator (14) connected to the transfer conduit (38) separating the fluidised stream of fibres and carrier gas fed thereto from the transfer conduit (38) into a separated carrier gas stream and a separated fibre stream;

(vii) means (42) for separately recovering the separated carrier gas stream from the gas-fibre separator (14);

(viii) means (44) for separately discharging the separated fibres from the gas-fibre separator (14) to a mixer (12); and

(ix) a mixer (12) connected downstream of the gas-fibre separator (14) for receiving the separated fibres and mixing them with said solid particulate materials to form said blend; said apparatus providing in the flow path between the fluidiser (10) and the gas-fibre separator (14) a turbulent mixing zone (80) operating at a pressure differential in the range 25.4 to 88.9 cms. of water (10 to 35 inches) and through which the stream of carrier gas containing the entrained fibres flows en route to the gas-fibre separator.

16. Apparatus according to claim 15, wherein the impeller means (34) comprise a motor-driven impeller fan whose casing (52) provides said turbulent mixing zone (80).

17. Apparatus according to claim 15, wherein the impeller means comprise an eductor (85) mounted in said conduit (30).

18. Apparatus according to claim 15, 16 or 17, wherein the mixer (12) connected downstream of the gas-fibre separator (14) comprises a horizontal mixer having a horizontal shaft (64) rotatably mounted therein driven by a motor (59) and carrying a plurality of radially extending blades (65) at spaced intervals therealong for stirring the fibres fed thereto from the gas-fibre separator (14) and mixing the fibres with the solid particulate material.

19. Apparatus for blending a fluidised fibre stream with a particulate solids material to form a substantially homogeneous blend of solid particles and fibres, characterised in that the apparatus comprises in combination:

(i) a fibre fluidiser (618) for containing a bulk supply of the fibrous material to be blended with the particulate solid material;

(ii) agitation means (620-626) in the fluidiser (618) for maintaining the bulk fibrous material in a fluidised state;

(iii) a feed conduit (630) positioned below said fluidiser (618) for receiving therefrom a stream of fluidised fibre;

(iv) a means (608,611) for feeding a particulate solids material into said feed conduit (630) separately from the stream of fluidised fibre from the fluidiser (618);

(v) an impeller means (635) for drawing a stream of carrier gas through the feed conduit (630) to entrain the fluidised fibre fed thereto from the fluidiser (618) and the particulate solids material fed thereto by the particulate solids feed means (608,611) and operable to convey those fibres and particulate solids suspended in the carrier gas through a transfer conduit (638) to a gas-solids separator (614) for subsequent separation of the fibres and particulate solids as a uniform blend from the carrier gas;

(vi) the transfer conduit (638) conveying the stream of carrier gas containing the entrained fibre and particulate solids from the impeller means (635) to the gas-solids separator (614) at a velocity sufficient to maintain the fibres and particulate solids in suspension;

(vii) the gas-solids separator (614) connected to the transfer conduit (638) separating the fluidised stream of fibres particulate solid and carrier gas fed thereto from the transfer conduit (638) into a separated carrier gas stream and a solids stream comprising a blend of said fibres and said particulate solids;

(viii) means (642) for recovering the separated carrier gas stream from the gas-solids separator (614); and

(ix) means (658,700) for separately recovering from the separator (614) the separated blend of fibres and particulate solids; said apparatus providing in the flow path between the fluidiser (618) and the gas-solids separator (614) a turbulent mixing zone (680) operating at a pressure differential in the range 25.4 to 88.9 cms. of water (10 to 35 inches) and through which the stream of carrier gas containing the entrained fibres and particulate solids material flows en route to the gas-solids separator.

20. Apparatus according to claim 19, wherein the impeller means (625) comprise a motor-driven impeller fan whose casing provides said turbulent mixing zone (680).

21. Apparatus according to any one of claims 15-20, including a recycle conduit (639,651) for recycling at least a portion of the carrier gas stream recovered from said separator (14,614) to the feed conduit (30;630) upstream of said impeller means (35;635).

**Patentansprüche**

1. Verfahren zum Entfalten eines aufgehäuften faserigen Materials und Mischen des entfalteten faserigen Materials mit einem teilchenförmigen Feststoff zum Ausbilden einer im wesentlichen gleichförmigen Feststoffe/Faser-Mischung, welches die Schritte des Mitreißens der aufgehäuften Faser in einem Strom von Trägergas, Hindurchführens des Stroms von Trägergas, welcher die mitgerissene aufgehäufte Faser enthält, durch eine turbulente Mischzone zum Entklumpen der aufgehäuften Faser und zum vorsehen eines strömenden Trägergasstroms, der einen Strom von darin mitgerissenen getrennten Fasern enthält, zum Mischen mit dem teilchenförmigen Feststoff, umfaßt, **gekennzeichnet** durch die Schritte des:
    (a) Verteilens des aufgehäuften faserigen Materials aus einer Schüttfaserverteilungseinrichtung (16, 18, 20, 22, 24, 26, 27, 28, 616, 618, 620, 622, 624, 626, 627, 628) in einen Strom von Trägergas, der kontinuierlich in einem Kanal (30; 630) strömt;
    (b) Strömenlassens dieses Trägergasstroms, welcher das mitgerissene faserige Material enthält, durch einen Kanal (38; 638) zu einem Gas/Faser-Trenner (14; 614); wobei der Trägergasstrom, welcher das mitgerissene faserige Material enthält, in dem Kanal (38; 638) einen gemischten Gas/Faser-Strom bildet, der ein Gas:Faser-Volumenverhältnis im Bereich von 1300:1 bis 20000:1 hat und darin mit einer Gasgeschwindigkeit strömt, die ausreicht, das faserige Material in Suspension darin zu halten; wobei dieser Trägergasstrom, welcher das mitgerissene faserige Material enthält, in dem verlauf seines Hindurchgehens von der Schüttfaserverteilungseinrichtung (16 etc.) zu dem Trenner durch den Kanal (30; 630) durch eine turbulente Mischzone (80; 680) hindurchgeht, wobei er ein Druckdifferential über der turbulenten Mischzone (80; 680) in dem Bereich von 25,4 bis 88,9 cm (10 bis 35 Zoll) Wasser liefert;
    (c) Trennens der mitgerissenen Fasern von dem Trägergas in dem Trenner (14; 614) zum Vorsehen einer Faserwiedergewinnung von wenigstens 90 %, basierend auf dem Fasergehalt des gemischten Gas/Faser-Stroms, welcher durch den Kanal (38; 638) strömt; und
    (d) Beförderns der abgetrennten Faser, die von dem Trenner (38) wiedergewonnen worden ist, zu einem Mischer (12), worin die teilchenförmigen Feststoffe, die mit der Faser gemischt werden sollen, hinzugefügt werden, und worin das abgetrennte faserige Material, das in dem Trenner (14) wiedergewonnen worden ist, mit dem teilchenförmigen Material unter Bedingungen des Rührens zur Ausbildung einer im wesentlichen gleichförmigen Feststoffe/Faser-Mischung gemischt wird.

2. Verfahren zum Entfalten eines aufgehäuften faserigen Materials und Mischen des entfalteten faserigen Materials mit einem teilchenförmigen Feststoff zum Ausbilden einer im wesentlichen gleichförmigen Feststoffe/Faser-Mischung, und welches die Schritte des Mitreißens der aufgehäuften Faser in einem Strom von Trägergas, Hindurchführens des Stroms von Trägergas, welcher die mitgerissene aufgehäufte Faser enthält, durch eine turbulente Mischzone zum Entklumpen der aufgehäuften Faser und zum Vorsehen eines strömenden Trägergasstroms, der einen Strom von darin mitgerissenen getrennten Fasern enthält, zum Mischen mit dem teilchenförmigen Feststoff, umfaßt, **gekennzeichnet** durch die Schritte des:
    (a) Verteilens des aufgehäuften faserigen Materials aus einer Schüttfaserverteilungseinrichtung (16, 18, 20, 22, 24, 26, 27, 28; 616, 618, 620, 622, 624, 626, 627, 628) in einen Strom von Trägergas, der kontinuierlich in einem Kanal (30; 630) strömt;
    (b) Einverleibens der teilchenförmigen Feststoffe, die mit der Faser gemischt werden sollen, in den Trägergasstrom, welcher die mitgerissenen Fasern enthält, so daß dadurch ein Trägergasstrom hergestellt wird, der sowohl Feststoffe als auch Faser enthält;
    (c) Strömenlassens dieses Trägergasstroms, welcher die mitgerissenen Feststoffe und Faser enthält, mittels eines Kanals (38; 638) zu einem Gas/Feststoffe-Trenner (14; 614); wobei der Trägergasstrom, welcher die mitgerissenen Feststoffe und faseriges Material enthält, in dem Kanal (38; 638) einen gemischten Gas/Feststoffe-Strom bildet, der ein Gas:Gesamtfeststoffe-Volumenverhältnis in dem Bereich von 1300:1 bis 20000:1 hat und darin mit einer Gasgeschwindigkeit strömt, die ausreichend ist, die Feststoffe und das faserige Material in Suspension darin zu halten; wobei dieser Trägergasstrom, welcher die mitgerissenen Feststoffe und Faser enthält, in dem verlauf seines Hindurchgehens von der Schüttfaserverteilungseinrichtung (16 etc) zu dem Trenner (14; 614) durch den Kanal (30; 630) durch eine turbulente Mischzone (80; 680) hindurchgeht, wobei er ein Druckdifferential über der turbulenten Mischzone (80; 680) in dem Bereich von 25,4 bis 88,9 cm (10 bis 35 Zoll) Wasser liefert;
(d) Trennens der mitgerissenen Mischung von Feststoffen und faserigem Material von dem Trägergas in dem Trenner (14; 614), um eine Gesamtfeststoffe-Wiedergewinnung von wenigstens 90 % vorzusehen, basierend auf dem Gesamtfeststoffgehalt des gemischten Gas/Feststoffe-Stroms, welcher durch den Kanal (38; 638) strömt, und um dadurch von dem Trenner eine im wesentlichen gleichförmige Mischung der Feststoffe und der Faser wiederzugewinnen.

3. Verfahren nach Anspruch 1 oder 2, dadurch **gekennzeichnet,** daß der Schritt (a) das Zuführen der angehäuften Faser zu einem Behälter (10; 606, 618), das Aufrechterhalten der angehäuften Faser darin in einem fluidisierten Zustand, und das Abgeben der fluidisierten Fasern durch einen Schacht (28; 628) in dem Boden des Behälters in den darunter befindlichen Kanal (30; 630) umfaßt.

4. Verfahren nach Anspruch 1, 2 oder 3, dadurch **gekennzeichnet,** daß nach der Abtrennung der mitgerissenen Feststoffe oder Feststoffe und Faser, je nachdem, von dem Trägergas in dem Trenner (14; 614) wenigstens ein Teil des Trägergases im Kreislauf zurückgeführt wird.

5. Verfahren nach Anspruch 1, 2, 3 oder 4, dadurch **gekennzeichnet,** daß die Geschwindigkeit des Trägergasstroms in dem Kanal (38; 638) wenigstens 304,8 m/min. (1.000 Fuß/min.) ist.

6. Verfahren nach Anspruch 5, dadurch **gekenn-**

**zeichnet,** daß die Geschwindigkeit in dem Bereich von 304,8 bis 1828,8 m/min. (1000 bis 6000 Fuß/min.) ist.

7. Verfahren nach irgendeinem der Ansprüche 1 bis 6, dadurch **gekennzeichnet,** daß das Volumenverhältnis von Trägergas:Feststoffen oder Feststoffen und Faser, je nachdem, in dem Kanal (38; 638) in dem Bereich von 1800:1 bis 3000:1 ist.

8. Verfahren nach irgendeinem der Ansprüche 1 bis 7, dadurch **gekennzeichnet,** daß sich die turbulente Mischzone (80; 680) stromaufwärts von den Kanälen (38; 638) befindet und mittels eines motorgetriebenen Flügelgebläses (34; 635) oder eines gasgetriebenen Abzugs (85) vorgesehen wird.

9. Verfahren nach irgendeinem der Ansprüche 1 bis 8, dadurch **gekennzeichnet,** daß das faserige Material Kohlenstoffaser umfaßt.

10. Verfahren nach irgendeinem der Ansprüche 1 bis 9, dadurch **gekennzeichnet,** daß die teilchenförmigen Feststoffe, die in die Feststoffe-Faser-Mischung aufgenommen werden sollen, Teilchen von genügend kleinem äquivalenten Kugeldurchmesser zum Beschichten der Faser, um irgendwelche Tendenz nach nachfolgender Agglomeration hin zu mindern, umfassen.

11. Verfahren nach Anspruch 10, dadurch **gekennzeichnet,** daß das teilchenförmige Material, das zu der Mischung zum Beschichten der Faser hinzugefügt wird, Ruß ist.

12. Verfahren nach Anspruch 11, dadurch **gekennzeichnet,** daß der Ruß in einer Menge von bis zu 5 Gew.-%, basierend auf dem kombinierten Gewicht von Faser und Feststoffen, welche die Mischung bilden, hinzugefügt wird.

13. Verfahren nach irgendeinem der Ansprüche 1 bis 9, dadurch **gekennzeichnet,** daß die teilchenförmigen Feststoffe, die in die Feststoffe-Faser-Mischung aufgenommen werden sollen, ein teilchenförmiges formbares Matrixmaterial umfassen, so daß dadurch eine im wesentlichen homogene formbare Mischung von Fasern und Matrixmaterial gebildet wird.

14. Verfahren nach Anspruch 13, dadurch **gekennzeichnet,** daß die Feststoffe-Faser-Mischung eine formbare Bremskissenzusammensetzung ist.

**15.** Einrichtung zum Mischen eines fluidisierten Faserstroms mit einem teilchenförmigen Feststoffmaterial zur Ausbildung einer im wesentlichen homogenen Mischung von Feststoffteilchen und Fasern, dadurch **gekennzeichnet,** daß die Einrichtung in Kombination folgendes umfaßt:

(i) eine Faserfluidisiereinrichtung (10) zum Enthalten eines Schüttvorrats des mit dem teilchenförmigen Feststoffmaterial zu mischenden faserigen Materials;

(ii) eine Rühreinrichtung (20-26) in der Fluidisiereinrichtung (10) zum Aufrechterhalten des losen faserigen Materials in einem fluidisierten Zustand;

(iii) einen Speisekanal (30), der unter der Fluidisiereinrichtung (10) zum Empfangen eines Stroms von fluidisierter Faser hiervon positioniert ist;

(iv) eine Antriebseinrichtung (34-36; 85) zum Ziehen eines Stroms von Trägergas durch den Speisekanal (30) zum Mitreißen von fluidisierten Fasern, die von der Fluidisiereinrichtung (10) darein zugeführt worden sind, und die dahingehend betreibbar ist, daß sie diese Fasern, welche in dem Trägergasstrom suspendiert sind, durch einen Transportkanal (38) zu einem Gas-Faser-Trenner (14) zur nachfolgenden Trennung der mitgerissenen Fasern von dem Trägergas und Mischen mit den teilchenförmigen Feststoffen fördert;

(v) wobei der Transportkanal (38) den Strom von Trägergas, welcher die mitgerissenen Fasern enthält, von der Antriebseinrichtung (34-36; 85) zu einem Gas-Faser-Trenner (14) mit einer Geschwindigkeit fördert, die genügt, um die Fasern in Suspension zu halten;

(vi) wobei der Gas-Faser-Trenner (14), der mit dem Transportkanal (38) verbunden ist, den demselben von dem Transportkanal (38) eingespeisten fluidisierten Strom von Fasern und Trägergas in einen getrennten Trägergasstrom und einen getrennten Faserstrom auftrennt;

(vii) eine Einrichtung (42) zum gesonderten Wiedergewinnen des abgetrennten Trägergasstroms von dem Gas-Faser-Trenner (14);

(viii) eine Einrichtung (44) zum gesonderten Entladen der abgetrennten Fasern von dem Gas-Faser-Trenner (14) in einen Mischer (12); und

(ix) einen Mischer (12), der stromabwärts von dem Gas-Faser-Trenner (14) zum Empfangen der abgetrennten Fasern und zum Mischen derselben mit den teilchenförmigen Feststoffmaterialien zur Ausbildung der Mischung verbunden ist; wobei diese Einrichtung in dem Strömungsweg zwischen der Fluidisiereinrichtung (10) und dem Gas-Faser-Trenner (14) eine turbulente Mischzone (80) vorsieht, die bei einem Druckdifferential in dem Bereich von 25,4 bis 88,9 cm Wasser (10 bis 35 Zoll) arbeitet und durch welche der Strom von Trägergas, der die mitgerissenen Fasern enthält, auf dem Weg zu dem Gas-Faser-Trenner strömt.

**16.** Einrichtung nach Anspruch 15, worin die Antriebseinrichtung (34) ein motorgetriebenes Flügelgebläse umfaßt, dessen Gehäuse (52) die turbulente Mischzone (80) vorsieht.

**17.** Einrichtung nach Anspruch 15, worin die Antriebseinrichtung einen in dem Kanal (30) angebrachten Abzug (85) umfaßt.

**18.** Einrichtung nach Anspruch 15, 16 oder 17, worin der Mischer (12), der stromabwärts von dem Gas-Faser-Trenner (14) verbunden ist, einen horizontalen Mischer umfaßt, welcher eine drehbar darin angebrachte horizontale Welle (64) hat, die mittels eines Motors (59) angetrieben ist und eine Mehrzahl von sich radial erstreckenden Schaufeln (65) in beabstandeten Intervallen entlang derselben zum Rühren der Fasern, die derselben von dem Gas-Faser-Trenner (14) zugeführt werden, und zum Mischen der Fasern mit dem teilchenförmigen Feststoffmaterial trägt.

**19.** Einrichtung zum Mischen eines fluidisierten Faserstroms mit einem teilchenförmigen Feststoffmaterial zur Ausbildung einer im wesentlichen homogenen Mischung von Feststoffteilchen und Fasern, dadurch **gekennzeichnet,** daß die Einrichtung in Kombination folgendes umfaßt:

(i) eine Faserfluidisiereinrichtung (618) zum Enthalten eines Schüttvorrats des faserigen Materials, das mit dem teilchenförmigen Feststoffmaterial vermischt werden soll;

(ii) eine Rühreinrichtung (620-626) in der Fluidisiereinrichtung (618) zum Aufrechterhalten des losen faserigen Materials in einem fluidisierten Zustand;

(iii) einen Speisekanal (630), der unter der Fluidisiereinrichtung (618) zum Empfangen eines Stroms von fluidisierter Faser hiervon positioniert ist;

(iv) eine Einrichtung (608, 611) zum Zuführen eines teilchenförmigen Feststoffmaterials in den Speisekanal (630) gesondert von dem Strom von fluidisierter Faser von der Fluidisiereinrichtung (618);

(v) eine Antriebseinrichtung (35) zum Ziehen eines Stroms von Trägergas durch den Speisekanal (630), um die fluidisierte Faser, die derselben von der Fluidisiereinrichtung (618) zugeführt wird, und das teilchenförmige Feststoffmaterial, die derselben durch die Speiseeinrichtung (608, 611) für teilchenförmige Feststoffe zugeführt wird, mitzureißen, und die dahingehend betreibbar ist, daß sie diese Fasern und teilchenförmigen Feststoffe, die in dem Trägergas suspendiert sind, durch einen Transportkanal (638) zu einem suspendierten Gas-Feststoffe-Trenner (614) fördert, und zwar zur nachfolgenden Trennung der Fasern und teilchenförmigen Feststoffe als eine gleichförmige Mischung von dem Trägergas;

(vi) wobei der Transportkanal (638) den Strom von Trägergas, welcher die mitgerissenen Faser und teilchenförmigen Feststoffe enthält, von der Antriebseinrichtung (635) zu einem Gas-Feststoffe-Trenner (614) mit einer Geschwindigkeit fördert, die ausreicht, um die Fasern und teilchenförmigen Feststoffe in Suspension zu halten;

(vii) wobei der Gas-Feststoffe-Trenner (614), der mit dem Transportkanal (638) verbunden ist, den fluidisierten Strom von Fasern, teilchenförmigem Feststoff und Trägergas, der demselben von dem Transportkanal (638) zugeführt worden ist, in einen getrennten Trägergasstrom und einen Feststoffstrom, welcher eine Mischung der Fasern und der teilchenförmigen Feststoffe enthält, auftrennt;

(viii) eine Einrichtung (642) zum Wiedergewinnen des abgetrennten Trägergasstroms von dem Gas-Feststoffe-Trenner (614); und

(ix) eine Einrichtung (658, 700) zum gesonderten Wiedergewinnen der abgetrennten Mischung von Fasern und teilchenförmigen Feststoffen von dem Trenner (614); wobei die Einrichtung in dem Strömungsweg zwischen der Fluidisiereinrichtung (618) und dem Gas-Feststoffe-Trenner (614) eine turbulente Mischzone (680) vorsieht, die bei einem Druckdifferential in dem Bereich von 25,4 bis 88,9 cm Wasser (10 bis 35 Zoll) arbeitet und durch welche der Strom von Trägergas, der die mitgerissenen Fasern und teilchenförmiges Feststoffmaterial enthält, auf dem Weg zu dem Gas-Feststoffe-Trenner strömt.

20. Einrichtung nach Anspruch 19, worin die Antriebseinrichtung (625) ein motorgetriebenes Flügelgebläse umfaßt, dessen Gehäuse die turbulente Mischzone vorsieht.

21. Einrichtung nach irgendeinem der Ansprüche 15 bis 20, umfassend einen im Kreislauf zurückführenden Kanal (639, 651) zum Zurückführen von wenigstens einem Teil des Trägergasstroms, der von dem Trenner (14, 614) zurückgewonnen worden ist, im Kreislauf zu dem Speisekanal (30;630), stromaufwärts von der Antriebseinrichtung (35; 635).

**Revendications**

1. Un procédé d'exfoliation d'une matière fibreuse en vrac et de mélangeage de la matière fibreuse ainsi exfoliée avec une matière solide en particules pour former un mélange sensiblement uniforme matières solides/fibre comprenant les opérations consistant à entraîner la fibre en vrac dans un courant de gaz porteur, à faire passer le courant de gaz porteur contenant la fibre en vrac ainsi entraînée à travers une zone de mélange turbulent pour décompacter la fibre en vrac et créer une circulation du courant de gaz porteur contenant un courant de fibres séparées entraîné dans ce dernier en vue d'un mélangeage avec ladite matière solide en particules, caractérisé par les opérations consistant à :

a) distribuer la matière fibreuse en vrac à partir d'un moyen de distribution de fibres en vrac (16, 18, 20, 22, 24, 26, 27, 28 ; 616, 618, 620, 622, 624, 626, 627, 628) dans un courant de gaz porteur circulant de manière continue dans un conduit (30 ; 630) ;

b) faire circuler ce courant de gaz porteur contenant la matière fibreuse entraînée à travers un conduit (38 ; 638) vers un séparateur gaz/fibre (14 ; 614) ; le courant de gaz porteur contenant la matière fibreuse entraînée produisant dans ledit conduit (38 ; 638) un courant mélangé gaz/fibre présentant un rapport volumique gaz:fibre de l'ordre de 1300:1 à 20000:1 et circulant dans ce dernier à une vitesse de gaz suffisante pour y maintenir la matière fibreuse en suspension : ce courant de gaz porteur contenant la matière fibreuse entraînée au cours de son passage depuis les moyens de distribution de fibres en vrac (16, etc.) vers le séparateur par l'intermédiaire du conduit (30 ; 630), en passant à travers une zone de mélange turbulent (80 ; 680) créant une pression différentielle aux bornes de la zone de mélange turbulent (80 ; 680) de l'ordre de 25,4 à 88,9 cm (10 à 35 pouces) d'eau ;

c) à séparer les fibres entraînées du gaz support dans ledit séparateur (14 ; 614) pour créer une récupération de fibres d'au moins 90 % sur la base de la teneur en fibres du courant mélangé gaz/fibre circulant à travers le conduit (38 ; 638) ; et

d) faire passer la fibre séparée récupérée du séparateur (38) dans un mélangeur (12) dans lequel les matières solides en particules devant être mélangées avec la fibre sont ajoutées, et dans lequel la matière fibreuse séparée qui a été récupérée dans le séparateur (14) est mélangée avec la matière en particules sous agitation afin de former un mélange pratiquement uniforme matières solides/fibre.

2. Un procédé d'exfoliation d'une matière fibreuse en vrac et de mélangeage de la matière fibreuse ainsi exfoliée avec une matière solide en particules pour former un mélange sensiblement uniforme matières solides/fibre comprenant les opérations consistant à entraîner la fibre en vrac dans un courant de gaz porteur, à faire passer le courant de gaz porteur contenant la fibre en vrac ainsi entraînée à travers une zone de mélange turbulent pour décompacter la fibre en vrac et créer une circulation de courant de gaz porteur contenant un courant de fibres séparées entraîné dans ce dernier en vue d'un mélangeage avec ladite matière solide en particules, caractérisé par les opérations consistant à :

a) distribuer la matière fibreuse en vrac à partir d'un moyen de distribution de fibre en vrac (16, 18, 20, 22, 24, 26, 27, 28 ; 616, 618, 620, 622, 624, 626, 627, 628) dans un courant de gaz porteur circulant de manière continue dans un conduit (30 ; 630) ;

b) incorporer, dans le courant de gaz porteur contenant les fibres entraînées, les matières solides en particules devant être mélangées avec la fibre, de manière ainsi à établir un courant de gaz porteur contenant à la fois des matières solides et la fibre ;

c) faire circuler ce courant de gaz porteur contenant les matières solides entraînées et la fibre à travers un conduit (38 ; 638) vers un séparateur gaz/matières solides (14 ; 614) ; le courant de gaz porteur contenant les matières solides et la matière fibreuse entraînées produisant dans ledit conduit (38 ; 638) un courant mélangé gaz/matières solides présentant un rapport volumique gaz:ensemble des matières solides de l'ordre de 1300:1 à 20000:1 et circulant dans ce dernier à une vitesse de gaz suffisante pour y maintenir les matières solides et la matière fibreuse en suspension ; ce courant de gaz porteur contenant les matières solides et la fibre entraînées, au cours de son passage depuis les moyens de distribution de fibre en vrac (16, etc.) vers le séparateur (14 ; 614) par l'intermédiaire dudit conduit (30 ; 630), en passant à travers une zone de mélange turbulent (80 ; 680) créant une pression différentielle aux bornes de la zone de mélange turbulent (80 ; 680) de l'ordre de 25,4 à 88,9 cm (10 à 35 pouces) d'eau ;

d) à séparer le mélange entraîné de matières solides et de matières fibreuses du gaz support dans ledit séparateur (14 ; 614) pour créer une récupération de l'ensemble des matières solides d'au moins 90 %, sur la base de la teneur en matières solides du courant mélangé gaz/matières solides circulant à travers le conduit (38 ; 638) ; et ainsi récupérer du séparateur un mélange sensiblement uniforme desdites matières solides et de ladite fibre.

3. Un procédé selon la revendication 1 ou 2, caractérisé en ce que l'opération (a) comprend le fait d'amener la fibre en vrac vers un récipient (10 ; 606, 618), d'y maintenir la fibre en vrac à l'état fluidisé et de faire passer les fibres fluidisées à travers une goulotte (28 ; 628) au fond du récipient vers le conduit (30 ; 630) situé en dessous.

4. Un procédé selon la revendication 1, 2 ou 3, caractérisé en ce qu'après séparation des matières solides entrainées ou des matières solides et de la fibre entraînées, selon le cas, à partir du gaz porteur dans le séparateur (14 ; 614), au moins une partie du gaz porteur est recyclée.

5. Un procédé selon la revendication 1, 2, 3 ou 4, caractérisé en ce que la vitesse du courant de gaz porteur dans ledit conduit (38 ; 638) est d'au moins 304,8 m/min (1000 pieds/min.).

6. Un procédé selon la revendication 5, caractérisé en ce que ladite vitesse est de l'ordre de 304,8 à 1828,8 m/min. (1000 à 6000 pieds/min.).

7. Un procédé selon l'une quelconque des revendications 1 à 6, caractérisé en ce que le rapport volumique du gaz porteur par rapport aux matières solides ou aux matières solides et à la fibre, selon le cas, dans ledit conduit (38 ; 638) est de l'ordre de 1800:1 à 3000:1.

8. Un procédé selon l'une quelconque des revendications 1 à 7, caractérisé en ce que la zone de mélange turbulent (80 ; 680) est placée à l'amont des conduits (38 ; 638) et est créée par un ventilateur à soufflante (34 ; 635) entraîné par un moteur ou un organe d'aspiration (85) entraîné par un gaz.

9. Un procédé selon l'une quelconque des revendications 1 à 8, caractérisé en ce que la matière fibreuse comprend des fibres de carbone.

10. Un procédé selon l'une quelconque des revendications 1 à 9, caractérisé en ce que les matières solides en particules devant être incorporées dans le mélange matières solides/fibre comprennent des particules de diamètres sphériques équivalents suffisamment faibles pour recouvrir la fibre afin de diminuer une tendance quelconque vers une agglomération ultérieure.

11. Un procédé selon la revendication 10, caractérisé en ce que la matière en particules ajoutée au mélange pour revêtir les fibres est du noir de carbone.

12. Un procédé selon la revendication 11, caractérisé en ce que le noir de carbone est ajouté selon une quantité allant jusqu'à 5 % en poids, sur la base du poids combiné de la fibre et des matières solides formant le mélange.

13. Un procédé selon l'une quelconque des revendications 1 à 9, caractérisé en ce que les matières solides en particules devant être incorporées dans le mélange matières solides/fibre comprennent une matière en particules de matrice moulable, de manière à former un mélange moulable sensiblement homogène de fibres et de la matière de matrice.

14. Un procédé selon la revendication 13, caractérisé en ce que le mélange matières solides/fibre est une composition moulable pour patins de frein.

15. Appareil pour mélanger un courant de fibre fluidisé avec une matière solide en particules afin de former un mélange sensiblement homogène de particules solides et de fibres, caractérisé en ce que l'appareil comprend en combinaison :

   a) un fluidiseur de fibres (10) pour contenir une alimentation en vrac de la matière fibreuse à mélanger avec la matière solide en particules ;
   b) des moyens d'agitation (20-26) dans le fluidiseur (10) pour maintenir la matière fibreuse en vrac dans un état fluidisé ;

   c) un conduit d'alimentation (30) placé en dessous dudit fluidiseur (10) pour recevoir de ce dernier un courant de fibre fluidisée ;
   d) des moyens à soufflante (34-36 ; 85) pour aspirer un courant de gaz porteur à travers le conduit d'alimentation (30) afin d'entraîner les fibres fluidisées amenées vers ce dernier à partir du fluidiseur (10) et actionnable pour transporter ces fibres à l'état suspendu dans le gaz porteur à travers un conduit de transfert (38) vers un séparateur gaz/fibre (14) en vue d'une séparation ultérieure des fibres entraînées depuis le gaz porteur et pour un mélangeage avec les matières solides en particules ;
   e) le conduit de transfert (38) transportant le courant de gaz porteur contenant les fibres entraînées depuis les moyens à soufflante (34-36 ; 85) vers un séparateur gaz/fibre (14) à une vitesse suffisante pour maintenir les fibres en suspension ;
   f) le séparateur gaz/fibre (14) relié au conduit de transfert (38) séparant le courant fluidisé de fibres et le gaz porteur amené à ce dernier depuis le conduit de transfert (38) en un courant de gaz porteur séparé et en un courant de fibres séparé ;
   g) des moyens (42) pour récupérer de manière séparée le courant de gaz porteur séparé provenant du séparateur gaz/fibre (14) ;
   h) des moyens (44) pour évacuer de manière séparée les fibres séparées provenant du séparateur gaz/fibre (14) vers un mélangeur (12) ; et
   i) un mélangeur (12) relié à l'aval du séparateur gaz/fibre (14) pour recevoir les fibres séparées et les mélanger avec lesdites matières solides en particules afin de former ledit mélange ; ledit appareil créant, dans le trajet de circulation entre le fluidiseur (10) et le séparateur gaz/fibre (14), une zone de mélange turbulent (80) agissant à une pression différentielle de l'ordre de 25,4 à 88.9 cm d'eau (10 à 35 pouces) et à travers laquelle le courant de gaz porteur contenant les fibres entraînées circule dans son passage vers le séparatur gaz/fibre.

16. Appareil selon la revendication 15, dans lequel les moyens à soufflante (34) comprennent un ventilateur à soufflante entraîné par un moteur dont le carter (52) crée ladite zone de mélange turbulent (80).

17. Appareil selon la revendication 15, dans lequel les moyens à soufflante comprennent un organe d'aspiration (85) monté dans ledit conduit (30).

18. Appareil selon la revendication 15, 16 ou 17, dans lequel le mélangeur (12) relié à l'aval du séparateur gaz/fibre (14) comprend un mélangeur horizontal présentant un arbre horizontal (64) monté à rotation dans ce dernier, entraîné par un moteur (59) et portant un ensemble de pales radiales (65) à des intervalles écartés le long de celui-ci pour agiter les fibres qui y sont amenées à partir du séparateur gaz/fibre (14) et mélanger les fibres avec la matière solide en particules.

19. Appareil pour mélanger un courant de fibre fluidisé avec une matière solide en particules afin de former un mélange sensiblement homogène de particules solides et de fibres, caractérisé en ce que l'appareil comprend en combinaison :

a) un fluidiseur à fibres (618) pour contenir une alimentation en vrac de la matière fibreuse devant être mélangée avec la matière solide en particules ;

b) des moyens d'agitation (620-626) dans le fluidiseur (618) pour maintenir, dans un état fluidisé, la matière fibreuse en vrac ;

c) un conduit d'alimentation (630) placé en dessous dudit fluidiseur (618) pour recevoir de ce dernier un courant de fibre fluidisé ;

d) un moyen (608, 611) pour amener une matière solide en particules dans ledit conduit d'alimentation (630) séparément du courant de fibre fluidisé provenant du fluidiseur (618) ;

e) des moyens à soufflante (635) pour aspirer un courant de gaz porteur à travers le conduit d'alimentation (630) afin d'entraîner la fibre fluidisée amenée à ce dernier depuis le fluidiseur (618) et la matière solide en particules amenée à ce dernier par les moyens d'amenée de la matière solide en particules (608, 611) et actionnable pour transporter ces fibres et cette matière solide en particules en suspension dans le gaz porteur à travers un conduit de transfert (638) vers un séparateur gaz/matières solides (614) en vue d'une séparation ultérieure des fibres et des matières solides en particules sous la forme d'un mélange uniforme par rapport au gaz porteur ;

f) le conduit de transfert (638) portant le courant de gaz support contenant la fibre entraînée et les matières solides en particules depuis les moyens à soufflante (635) vers le séparateur gaz/matières solides (614) à une vitesse suffisante pour maintenir en suspension les fibres et les matières solides en particules ;

g) le séparateur gaz/matières solides (614) relié au conduit de transfert (638) séparant le courant fluidisé de fibres, de matières solides en particules et de gaz porteur amené à celui-ci depuis le conduit de transfert (638) en un courant de gaz porteur séparé et en un courant de matières solides comprenant un mélange desdites fibres et desdites matières solides en particules ;

h) des moyens (642) pour récupérer le courant de gaz porteur séparé du séparateur gaz/matières solides (614) ; et

i) des moyens (658, 700) pour récupérer, de manière séparée depuis le séparateur (614), le mélange séparé de fibres et de matières solides en particules ; ledit appareil créant, dans le trajet de circulation entre le fluidiseur (618) et le séparateur gaz/matières solides (614), une zone de mélange turbulent (680) agissant à une pression différentielle de l'ordre de 25,4 à 88,9 cm d'eau (10 à 35 pouces) et à travers laquelle le courant de gaz porteur contenant les fibres entraînées et la matière solide en particules circule dans son trajet vers le séparateur gaz/matières solides.

20. Appareil selon la revendication 19, dans lequel les moyens à soufflante (625) comprennent un ventilateur à soufflante entraîné par un moteur dont le carter crée ladite zone de mélange turbulent (680).

21. Appareil selon l'une quelconque des revendications 15 à 20, comprenant un conduit de recyclage (639, 651) pour recycler au moins une partie du courant de gaz porteur récupéré dudit séparateur (14 ; 614) vers le conduit d'alimentation (30 ; 630) à l'amont desdits moyens à soufflante (35 ; 635).

FIG. 4

'C-C'

FIG. 1

EP 0 293 390 B1

FIG. 2

'B-B'

FIG. 3

'A-A'

EP 0 293 390 B1

FIG. 3A

FIG. 2A

FIG. 5

FIG. 6

FIG. 7

FIG. 8

FIG. 9

FIG. 10